# EUROPÄISCHE PATENTSCHRIFT

(11) **EP 4 215 662 B1**
(45) Veröffentlichungstag und Bekanntmachung des Hinweises auf die Patenterteilung: **12.06.2024**
(21) Anmeldenummer: 22152843.3
(22) Anmeldetag: 24.01.2022
(51) Int. Cl.: D04B 1/22, D04B 1/14

(54) **VERFAHREN ZUR HERSTELLUNG VON EDELMETALLNETZEN AUF FLACHSTRICKMASCHINEN**
METHOD FOR THE MANUFACTURE OF NOBLE METAL GAUZES ON FLAT KNITTING MACHINES
PROCÉDÉ DE FABRICATION DE FILETS EN MÉTAL NOBLE SUR DES MACHINES À TRICOTER RECTILIGNES

(43) Veröffentlichungstag der Anmeldung: 26.07.2023
(73) Patentinhaber: Heraeus Precious Metals GmbH & Co. KG, 63450 Hanau (DE)
(72) Erfinder: HIRSCHEL, Pascal, 63450 Hanau (DE); SPOD, Hendrik, 63450 Hanau (DE); WALD, Verena, 63450 Hanau (DE)
(74) Vertreter: Heraeus IP

(56) Entgegenhaltungen:
- EP-A1- 0 680 787
- EP-A1- 3 795 728
- EP-B1- 1 358 010

## Beschreibung

Die vorliegende Erfindung betrifft ein Verfahren zur Herstellung eines zweilagigen Edelmetallnetzes auf einer Flachstrickmaschine, die ein erstes und ein zweites Nadelbett aufweist. Das Verfahren umfasst das Bereitstellen von mindestens einem edelmetallhaltigen Draht und das Stricken des Edelmetallnetzes. Auf dem ersten und zweiten Nadelbett werden simultan die erste und die zweite Lage des Edelmetallnetzes gestrickt und diese beiden Teile werden zumindest teilweise an ihren beiden jeweiligen Stoßkanten verbunden.

Die heterogen edelmetallkatalysierte Oxidation von Ammoniak (NH₃) zu Salpetersäure (HNO₃, Ostwald-Verfahren) oder Herstellung von Cyanwasserstoff (HCN, Andrussow-Verfahren) ist aufgrund der zentralen Relevanz der Produkte für die chemische Industrie von großer Bedeutung. Die dafür eingesetzten Katalysatorsysteme werden meist in Form von gasdurchlässigen Flächengebilden in die Reaktionszone eines Strömungsreaktors in einer Ebene senkrecht zur Strömungsrichtung des Frischgases eingebaut. Auch Auffang- oder Catchment-Systeme zur Rückgewinnung von verdampften katalytisch aktiven Bestandteilen basieren häufig auf solchen netzförmigen Strukturen. Es werden zweckmäßigerweise meist mehrere Netze hintereinander angeordnet und zu einem Katalysatornetzstapel zusammengefasst. Die einzelnen Netze bestehen dabei aus feinen Edelmetalldrähten, die überwiegend Platin (Pt), Palladium (Pd), Rhodium (Rh) oder Legierungen dieser Metalle enthalten. Vor allem Catchment-Netze können auch weitere Bestandteile wie beispielsweise Nickel enthalten.

Zur Herstellung solcher Maschenwaren sind eine Reihe von Verfahren bekannt, zum Beispiel das Weben, Wirken und Stricken. Weben und Wirken sind vor allem für die Herstellung rechteckiger Netzbahnen mit homogener Materialverteilung und Struktur geeignet. In Bezug auf die Formgestaltung und Materialvariabilität der zu fertigenden Produkte bieten sie wenig Flexibilität. Aus den gefertigten Bahnen müssen in einem zusätzlichen Verfahrensschritt die Netze auf für die Reaktoren geeignete Größe und Form zugeschnitten werden, wobei Verschnitt mit Edelmetallbestandteilen entsteht. Außerdem erfordern die eingesetzten Maschinen lange Rüstzeiten und einen hohen Materialeinsatz.

Das Stricken bietet im Vergleich eine höhere Flexibilität: über die verwendeten Strickmuster, Drähte (z.B. was Dicke und Material betrifft), Nadeln und Zugspannung des Drahtes kann sowohl das Flächengewicht als auch die Struktur, Dehnbarkeit und Festigkeit der erhältlichen Gestricke variiert werden. Ein weiterer Vorteil sind die deutlich kürzeren Rüstzeiten der Maschinen. Außerdem ist die Verwendung unterschiedlicher Materialien in einem Gestrick möglich, beim s.g. Intarsien-Stricken werden beispielsweise unterschiedliche Bereiche aus unterschiedlichen Garnen oder Drähten gefertigt. Die Länge eines Gestricks ist dabei prinzipiell nicht begrenzt, die maximale Breite ist jedoch im Fall von Flachstrickmaschinen durch die Breite der Nadelbetten vorgegeben.

Beim Stricken können Flachstrickmaschinen oder Rundstrickmaschinen zum Einsatz kommen. Bei Rundstrickmaschinen sind die Nadeln in einem kreisförmigen Nadelbett angeordnet und die Faden- bzw. Drahtzuführung erfolgt entsprechend in einer kreisförmigen Bewegung. Solche Maschinen erlauben vor allem die Herstellung von schlauchförmigen Strickwaren. Auf Flachstrickmaschinen dagegen können Form und Maß der Gestricke variiert werden. Letztere können auch über mehr als ein Nadelbett verfügen, zwischen denen bei der Fertigung das Garn bzw. der Draht mittels Fadenführern hin- und her geführt wird.

Die Verwendung von zwei Nadelbetten erlaubt die Herstellung eines einlagigen oder zweilagigen Gestricks. Ein einlagiges Gestrick kann prinzipiell auf zwei Arten entstehen: Einerseits, wenn nur auf einem Nadelbett gearbeitet wird, d.h. nur Maschen auf einem der Nadelbetten gebildet und miteinander verstrickt werden. Andererseits können auf dem ersten Nadelbett erzeugte Maschen mit auf dem zweiten Nadelbett erzeugten Maschen verstrickt werden, d.h. der Faden wird innerhalb einer Hin- und/oder Rückreihe zwischen den beiden Nadelbetten hin- und her geführt. Ein zweilagiges Gestrick entsteht dementsprechend, wenn parallel auf beiden Nadelbetten gestrickt wird und die auf der ersten Nadelreihe erzeugten Maschen nicht oder nur punktuell mit den auf dem zweiten Nadelbett erzeugten Maschen über die Randmaschen verstrickt werden. Bei dieser Herstellungsweise können also auch zwei einlagige Gestricke bzw. Lagen parallel auf dem ersten und zweiten Nadelbett gefertigt werden.

Das Stricken von Edelmetallnetzen ist in der EP 0544710 A1 beschrieben.

Die EP 0680787 A1 beschreibt das Stricken von zweilagigen Edelmetallnetzen, wobei die Maschen der einzelnen Lagen durch Polfäden miteinander verbunden werden. In der EP 3795728 A1 kommen dafür Flachstrickmaschinen zum Einsatz. Es wird beschrieben, dass separate Lagen, erzeugt auf unterschiedlichen Nadelbetten, mittels einer verbindenden Maschenreihe an einer Seite der beiden Strickflächen miteinander verbunden werden können. Das erlaube die Herstellung von Gestrickflächen mit größeren Breiten als vorher möglich.

Das Dokument EP 0544710 A1 offenbart den Oberbegriff des Anspruchs 1.

Es hat sich allerdings gezeigt, dass eine solche einseitige Verbindung zum Verziehen des Gestricks und dadurch zu Instabilitäten im Produktionsprozess führen kann. Solche Instabilitäten können sich einerseits in Abrissen des Drahtes während des Strickprozesses und andererseits durch ein Produkt mit mangelnder Qualität aufgrund von Unregelmäßigkeiten in Bezug auf die Struktur und die mechanischen Eigenschaften äußern.

Aufgabe der vorliegenden Erfindung war daher die Bereitstellung eines Verfahrens zur Herstellung von Edelmetallnetzen auf Flachstrickmaschinen mit hoher Prozessstabilität.

Die Aufgabe wird gelöst durch ein Verfahren zur Herstellung eines zweilagigen Edelmetallnetzes auf einer Flachstrickmaschine, wobei die Flachstrickmaschine ein erstes und ein zweites Nadelbett aufweist, umfassend die Schritte
- Bereitstellen von mindestens einem edelmetallhaltigen Draht,
- Stricken des Edelmetallnetzes,

wobei simultan auf dem ersten Nadelbett die erste Lage des Edelmetallnetzes und auf dem zweiten Nadelbett die zweite Lage des Edelmetallnetzes gestrickt werden,
wobei beide Lagen jeweils über mindestens zwei Stoßkanten verfügen,
dadurch gekennzeichnet, dass die erste und die zweite Lage des Edelmetallnetzes durch mindestens eine verbindende Strickmasche zumindest teilweise an ihren beiden jeweiligen Stoßkanten verbunden werden, wodurch ein zumindest teilweise schlauchartiges Gestrick entsteht.

Im Rahmen der Erfindung wurde erkannt, dass durch eine zumindest teilweise beidseitige Verbindung von Gestrickteilen aus Edelmetalldrähten auf unterschiedlichen Nadelbetten die Stabilität des Strickprozesses erhöht werden kann. Dadurch werden formstabile Gestricke erhalten, die zumindest teilweise eine offene Schlauchstruktur aufweisen. Durch die Stabilisierung des Strickprozesses kann außerdem die volle summierte Breite der beiden Nadelbetten einer Flachstrickmaschine ausgenutzt werden.

Das erfindungsgemäße Verfahren betrifft das Stricken auf einer Flachstrickmaschine mit einem ersten und einem zweiten Nadelbett.

Stricken ist charakterisiert durch die reihenweise Herstellung der entstehenden Gestricke, bei der ineinandergreifende Maschen gebildet werden. Während des Strickvorgangs auf einer Flachstrickmaschine mit zwei Nadelbetten wird zunächst eine Strickreihe auf mindestens einem der Nadelbetten gebildet. In Strickrichtung wird im Anschluss die nächste Strickreihe gebildet, wobei im Folgenden auf den Teil des Gestricks, der die erste Strickreihe enthält als "unten" Bezug genommen wird. Die Faden- bzw. Drahtführung erfolgt von einer Seite des Nadelbettes oder der Nadelbetten zur anderen Seite und zurück. Wenn im Folgenden Bezug auf einen "Faden" genommen wird soll die jeweilige Ausführung auch für einen entsprechenden "Draht" gelten. Eine Strickreihe umfasst daher eine Hin- und eine Rückreihe, was sich aus der Fadenführung ergibt. Die Fadenführung kann dabei in einer Strickreihe über nur eines oder beide Nadelbetten erfolgen. Typischerweise kann der Faden für eine vollständige Strickreihe zunächst auf dem ersten Nadelbett geführt werden (Hinreihe), anschließend wird der Faden in entgegengesetzte Richtung auf dem gleichen Nadelbett oder dem zweiten Nadelbett geführt (Rückreihe). Der Faden kann aber auch in einer Hin- und/oder Rückreihe abwechselnd auf beiden Nadelbetten geführt werden, wobei innerhalb einer Strickreihe Verbindungen zwischen Maschen auf den beiden Nadelbetten erzeugt werden. Die Fadenführung kann über die gesamte Breite des Nadelbetts bzw. der Nadelbetten erfolgen, es kann aber auch nur über Teile der Breite der Nadelbetten gestrickt werden. Je nachdem über welche Breite der Nadelbetten gestrickt wird kann die Breite und auch die Form des Gestricks bestimmt werden.

Das Verfahren umfasst das Bereitstellen von mindestens einem edelmetallhaltigen Draht.

Unter einem edelmetallhaltigen Draht wird ein Draht verstanden, der aus mindestens einem Edelmetall besteht oder einen nennenswerten Anteil (> 50 Gew.-%) an Edelmetall enthält. Unter Edelmetallen wird im Rahmen der vorliegenden Erfindung ein Metall ausgewählt aus der Gruppe bestehend aus Platinmetallen, Gold und Silber verstanden. Unter Platinmetallen sind die Metalle der sogenannten Platingruppe, also Platin (Pt), Palladium (Pd), Iridium (Ir), Rhodium (Rh), Osmium (Os) und Ruthenium (Ru), zu verstehen.

Bevorzugt besteht der mindestens eine edelmetallhaltige Draht aus Platin, einer Platinlegierung, Palladium oder einer Palladiumlegierung. Eine platinbasierte Legierung enthält mehr als 50 Gew.-% Platin, als weitere Legierungsbestandteile sind insbesondere Palladium, Rhodium und Ruthenium zu nennen. Eine palladiumbasierte Legierung enthält mehr als 50 Gew.-% Palladium.

Bevorzugt besteht der mindestens eine edelmetallhaltige Draht aus einer Legierung ausgewählt aus der Gruppe bestehend aus Platin mit 1 - 15 Gew.-% Rhodium, Platin mit 1 - 15 Gew.-% Rhodium und 0,1 - 20 Gew.-% Palladium, Platin mit 1 - 15 Gew.-% Rhodium, 0,1 - 20 Gew.-% Palladium und 0,1 - 5 Gew.-% Ruthenium, Platin mit 1 - 15 Gew.-% Rhodium, 0,1 - 40 Gew.-% Palladium und 0,001 - 5 Gew.-% Iridium, Platin mit 1 - 15 Gew.-% Rhodium, 0,1 - 20 Gew.-% Palladium und 0,001 - 5 Gew.-% Tantal, Platin mit 1 - 15 Gew.-% Rhodium, 0,001 - 5 Gew% Iridium und 0,001 - 5 Gew.-% Tantal, Palladium mit 1 - 25 Gew.-% Platin, Palladium mit 1 - 20 Gew.-% Platin und 1 - 15 Gew.-% Rhodium, Palladium mit 1 - 25 Gew.-% Wolfram, Palladium mit 1 - 15 Gew.-% Nickel, Palladium mit 0,001 - 5 Gew.-% Rhodium, Palladium mit 1 - 15 Gew.-% Kupfer, Palladium mit 1 - 15 Gew.-% Kupfer und 1 - 15 Gew.-% Nickel und Palladium mit 1 - 30 Gew.-% Cobalt.

Vorzugsweise werden edelmetallhaltige Drähte eingesetzt, die einen Durchmesser 40 - 150 µm aufweisen, bevorzugt 50 - 130 µm.

Der mindestens eine edelmetallhaltige Draht kann als Runddraht, das heißt mit einem runden Querschnitt, ausgebildet sein. In einer anderen Ausführung kann der Draht als abgeflachter Runddraht oder als Draht mit einem anderen Querschnitt ausgeführt werden.

Der mindestens eine edelmetallhaltige Draht kann mehrere Drähte, in diesem Fall auch als Filamente bezeichnet, umfassen, die bevorzugt miteinander verdrillt sein können. Die Filamente können alle aus dem gleichen Material bestehen, d.h. alle edelmetallhaltig sein, oder aus unterschiedlichen Materialien bestehen, die wiederum nicht alle edelmetallhaltig sein müssen.

In vielen Fällen kann es vorteilhaft sein, zwei oder mehr edelmetallhaltige Drähte gemeinsam miteinander zu verstricken. Mit anderen Worten können bei der Bildung einer Masche mehrere edelmetallhaltige Drähte gemeinsam geführt werden. Beim Stricken mit mehreren Drähten bestehen in einer Ausführungsform die edelmetallhaltigen Drähte aus dem gleichen Material, in weiteren Ausführungsformen können edelmetallhaltige Drähte bestehend aus mindestens zwei unterschiedlichen Materialien verwendet werden. Die mehreren Drähte können den gleichen oder unterschiedliche Durchmesser aufweisen.

Im erfindungsgemäßen Verfahren werden simultan auf dem ersten Nadelbett eine erste Lage des zweilagigen Edelmetallnetzes und auf dem zweiten Nadelbett eine zweite Lage des zweilagigen Edelmetallnetzes gestrickt. Mit anderen Worten werden während des Strickvorgangs gleichzeitig zwei Teile des zu fertigenden zweilagigen Edelmetallnetzes auf jeweils einem Nadelbett gestrickt, die Fertigung der beiden Lagen erfolgt also nicht nacheinander.

Unter "zweilagigen Edelmetallnetzen" werden im Rahmen der vorliegenden Erfindung solche Edelmetallnetze verstanden, die über zwei Lagen verfügen, wobei die Lagen im Allgemeinen über eine oder mehrere ihrer jeweiligen Stoßkanten miteinander verbunden sein können oder auch nicht an ihren Stoßkanten verbunden sein können. Die beiden Lagen liegen dabei übereinander, das heißt sie überlappen zumindest teilweise im Bereich ihrer Flächenausdehnung. Auch Edelmetallnetze die, wie im Fall der vorliegenden Erfindung, an einer Seite über die Stoßkanten der zwei Lagen miteinander verbunden sind werden als zweilagige Edelmetallnetze bezeichnet. Bei einem Aufklappen entlang der gemeinsamen Stoßkante ist ein einlagiges Edelmetallnetz erhältlich.

Die erste und die zweite Lage des zweilagigen Edelmetallnetzes verfügen jeweils über mindestens zwei Stoßkanten, d.h. jede Lage verfügt auf der einen Seite über eine Stoßkante und auf ihrer anderen Seite über eine weitere Stoßkante. Die Seiten der Edelmetalllagen sind hierbei in Bezug auf die Lage der Stoßkanten auf den beiden Nadelbetten senkrecht zur Strickrichtung zu verstehen. Je nach Form der jeweiligen Lage können sich die Stoßkanten einer Lage nicht schneiden, wie im Fall einer rechteckigen Lage, oder sich schneiden, wie beispielsweise im Fall einer halbkreisförmigen Lage. Die Stoßkanten werden während des Strickvorgangs in Strickrichtung von unten nach oben gebildet. Die beiden Edelmetalllagen können auch über eine obere und/oder untere Kante oder Stoßkante verfügen, das Vorhandensein dieser Kanten hängt von der Form der jeweiligen Lage ab. Eine rechteckige Lage verfügt neben den beiden seitlichen Stoßkanten beispielsweise über eine untere und eine obere Kante oder Stoßkante, eine halbkreisförmige Lage verfügt dagegen über keine weiteren Kanten oder Stoßkanten.

Unter den unteren Kanten oder Stoßkanten sind hierbei diejenigen Kanten oder Stoßkanten zu verstehen, die in Strickrichtung zuerst gebildet werden, sich also unten im Gestrick befinden. Dementsprechend sind unter den oberen Kanten oder Stoßkanten diejenigen zu verstehen, die in Strickrichtung später gebildet werden. Der Bezug für die Höhe des Gestricks, auf die im Folgenden Bezug genommen werden wird, ist die untere Strickreihe des Gestricks. Auch für den Fall, dass in unterschiedlichen Strickreihen mit dem Stricken einer Lage begonnen wird bleibt die Höhe des Gesamtstricks gleich, mit anderen Worten können die Lagen des Gestricks auf unterschiedlichen Höhen eine unterschiedliche Anzahl von Strickreihen umfassen.

Die erste und die zweite Lage des zweilagigen Edelmetallnetzes werden durch mindestens eine verbindende Strickmasche zumindest teilweise an ihren beiden jeweiligen Stoßkanten verbunden. Darunter ist zu verstehen, dass die beiden Lagen über Maschen, die aus dem mindestens einen edelmetallhaltigen Draht gebildet werden, miteinander verbunden werden. Durch diese Verbindungen entsteht ein zumindest teilweise schlauchartiges Gestrick.

Die Verbindung der beiden Edelmetallnetzlagen erfolgt auf beiden Seiten zumindest über Teile ihrer jeweiligen Stoßkanten, wobei diese teilweise Verbindungen auf gleicher Höhe, also in der gleichen Strickreihe oder den gleichen Strickreihen oder auf unterschiedlichen Höhen erfolgen kann. Die teilweisen Verbindungen können über die gleiche Länge auf beiden Seiten erfolgen, also über die gleiche Anzahl von Strickreihen. Die teilweisen Verbindungen können aber auch über eine unterschiedliche Länge auf beiden Seiten erfolgen.

In einer bevorzugten Ausführungsform erfolgen die teilweisen Verbindungen zumindest teilweise in den gleichen Strickreihen. In einer solchen Ausführungsform kann also zumindest teilweise im Kreis gestrickt bzw. rundgestrickt werden, mit anderen Worten entsteht über diese Strickreihen eine ringartige Struktur. Es hat sich gezeigt, dass das Stricken einer solchen zumindest teilweise ringartigen Struktur die Stabilität des Strickprozesses positiv beeinflussen kann.

Bevorzugt kann die erste und die zweite Lage des zweilagigen Edelmetallnetzes aus einem edelmetallhaltigen Draht oder edelmetallhaltigen Drähten gleicher Zusammensetzung gestrickt werden. Die beiden Lagen können aber auch aus edelmetallhaltigem Draht oder edelmetallhaltigen Drähten unterschiedlicher Zusammensetzung gestrickt werden.

Zum Stricken der ersten und zweiten Lage des zweilagigen Edelmetallnetzes kann edelmetallhaltiger Draht mit dem gleichen oder unterschiedlichen Durchmessern verwendet werden. Es hat sich als günstig erwiesen, dass die erste und die zweite Lage des zweilagigen Edelmetallnetzes aus einem edelmetallhaltigen Draht oder edelmetallhaltigen Drähten gleichen Durchmessers gestrickt werden.

Die erste und die zweite Lage des zweilagigen Edelmetallnetzes können in gleichen oder unterschiedlichen Strickmustern gestrickt werden. Unterschiedliche Strickmuster können beispielsweise durch unterschiedliche Maschenlängen, Flottungen oder Fänge entstehen. In bevorzugten Ausführungsformen werden die erste und die zweite Lage des zweilagigen Edelmetallnetzes im gleichen Strickmuster gestrickt.

Die erste und die zweite Lage des zweilagigen Edelmetallnetzes können die gleiche oder unterschiedliche Längen in Strickrichtung und/oder die gleiche oder unterschiedliche Breiten senkrecht zur Strickrichtung aufweisen. Bevorzugt haben die erste und die zweite Lage des Edelmetallnetzes die gleiche Länge und die gleiche Breite.

Die erste und die zweite Lage des zweilagigen Edelmetallnetzes können die gleiche Form oder unterschiedliche Formen haben. Besonders bevorzugt haben die erste und zweite Lage des zweilagigen Edelmetallnetzes die gleiche Form. Es kann vorteilhaft sein, dass die erste und die zweite Lage des zweilagigen Edelmetallnetzes die Form eines Halbkreises aufweisen, der an einer Seite abgeflacht sein kann. Besonders vorteilhaft kann sein, dass diese beiden Halbkreise die gleiche Breite und die gleiche Länge aufweisen.

In bevorzugten Ausführungsformen sind die erste und die zweite Lage des zweilagigen Edelmetallnetzes deckungsgleich, mit anderen Worten können die beiden Lagen die gleiche Länge, die gleiche Breite und die gleiche Form haben.

Es kann vorteilhaft sein, dass im erfindungsgemäßen Verfahren zusätzlich ein Stützfaden zum Einsatz kommt. Solche Stützfäden können eingesetzt werden, um das entstehende Gestrick oder das Verfahren zu stabilisieren, zum Beispiel um das Abreißen des edelmetallhaltigen Drahtes zu verhindern. Geeignete Stützfäden können durch Routineversuche und unter Berücksichtigung des endgültigen Verwendungszwecks des zweilagigen Edelmetallnetzes und eventuellen zusätzlichen Schritten im Herstellverfahren ausgewählt werden. Bevorzugte Stützfäden lassen sich nach der Herstellung des zweilagigen Edelmetallnetzes entfernen, beispielsweise durch Auflösen in sauren oder basischen Medien, Abschneiden, Schmelzen oder Abflammen. Solche Stützfäden können natürlicher oder synthetischer organischer Natur oder anorganischer Natur sein. Beispiele für geeignete Materialien sind Polyamide, Polyester, Zellulosefasern, Baumwolle, Acryl-Styrol-Polymere, Nylon, PVA und andere Vinylpolymere, Alginat, Kupfer, Silber, Aluminium, oder auch Metalle mit niedrigem Schmelzpunkt wie Zinn- und Blei-Legierungen.

Das Verfahren kann das simultane Stricken eines Stütznetzes unter Verwendung des Stützfadens umfassen. Mit anderen Worten kann das Stütznetz gleichzeitig mit den beiden Lagen des zu fertigenden zweilagigen Edelmetallnetzes gestrickt werden, die Fertigung der beiden Lagen und des Stütznetzes erfolgt also nicht nacheinander. Es kann bevorzugt sein, das Stütznetz zumindest teilweise auf dem ersten und dem zweiten Nadelbett zu stricken.

Unter "Stütznetz" werden die Bereiche des Gestricks verstanden, die zumindest teilweise unter Verwendung des Stützfadens gestrickt werden. Das Gestrick umfasst alle Strickreihen, die während des Verfahrens gebildet werden. Das Gestrick umfasst mindestens die erste und zweite Lage des zweilagigen Edelmetallnetzes. Das Gestrick kann aber auch weitere Teile oder Bereiche umfassen, beispielsweise ein Stütznetz.

Das Stütznetz kann auch weitere Fäden oder Drähte umfassen.

Der Stützfaden kann parallel mit dem mindestens einen edelmetallhaltigen Draht verstrickt werden, d.h. es können beim Stricken Maschen gebildet werden, die edelmetallhaltigen Draht und Stützfaden umfassen. Der betreffende Teil des entstehenden Gestricks enthält in diesen Fällen sowohl Edelmetall als auch das Material des Stützfadens. In anderen Ausführungsformen kann der Stützfaden auch für Teile oder Bereiche des Gestricks eingesetzt werden, die keinen edelmetallhaltigen Draht enthalten, d.h. das entstehende Gestrick enthält in diesen Fällen Teile mit und Teile ohne edelmetallhaltigen Draht. Diese Ausführungsformen können auch miteinander kombiniert werden.

Das Stütznetz kann dementsprechend mehrere Bereiche umfassen. Beispielsweise kann das Stütznetz auch Strickreihen umfassen, in denen kein edelmetallhaltiger Draht eingesetzt wird, in denen also nur mit dem Stützfaden gestrickt wird. Mit anderen Worten kann das Gestrick Bereiche umfassen, die keinen edelmetallhaltigen Draht enthalten. Das Gestrick kann auch über Strickreihen verfügen, die nur von Bereichen des Stütznetzes gebildet werden.

Die Form des Stütznetzes ist nicht weiter beschränkt. Es hat sich aber als vorteilhaft erwiesen, dass die Form des Stütznetzes so gestaltet ist, dass die Form des Gestrickes insgesamt rechteckig ist. Mit anderen Worten kann das Stütznetz die Lagen des Edelmetallnetzes derart ergänzen, dass die Form des Gestricks umfassend Edelmetalllage oder Edelmetalllagen und Stütznetz insgesamt eine rechteckige Form aufweist.

Es kann bevorzugt sein, dass das Stütznetz in den Bereichen, die keinen edelmetallhaltigen Draht enthalten, zweilagig gestrickt wird. Mit anderen Worten kann das Stütznetz in diesen Strickreihen nicht mit verbindenden Maschen zwischen dem ersten und zweiten Nadelbett gestrickt werden. Diese beiden Lagen können an den Randmaschen über verbindende Strickmaschen verbunden sein, es kann also vorteilhaft sein, dass das Stütznetz in diesen Bereichen eine schlauchartige Struktur hat. Bevorzugt kann auch sein, dass das Stütznetz in den Bereichen, die keinen edelmetallhaltigen Draht umfassen, einlagig gestrickt wird.

In bevorzugten Ausführungsformen umfasst das Stütznetz einlagig gestrickte Bereiche und zweilagig gestrickte Bereiche, die keinen edelmetallhaltigen Draht umfassen.

Es kann vorteilhaft sein, dass das Stütznetz die beiden Lagen des zweilagigen Edelmetallnetzes an mehr als einer Seite umgibt. In bevorzugten Ausführungsformen umgibt das Stütznetz die beiden Lagen des zweilagigen Edelmetallnetzes zu mindestens 50 %. Darunter ist zu verstehen, dass mindestens 50 % des Umfangs der beiden Lagen des zweilagigen Edelmetallnetzes vom Stütznetz umgeben sind, bevorzugter mindestens 60 %, noch bevorzugter mindestens 80 %. Besonders bevorzugt kann sein, dass das Stütznetz die beiden Lagen des zweilagigen Edelmetallnetzes vollständig umgibt.

Bevorzugt können alle Bereiche des Stütznetzes aus Stützfäden der gleichen Zusammensetzung gestrickt werden. Unterschiedliche Bereiche können aber auch aus Stützfäden unterschiedlicher Zusammensetzung gestrickt werden. Unterschiedliche Bereiche des Stütznetzes können in gleichen oder unterschiedlichen Strickmustern gestrickt werden.

Vorteilhaft kann sein, das Stütznetz in einem zusätzlichen Verfahrensschritt zu entfernen, beispielsweise zu zersetzen, aufzulösen, schmelzen, abzuflammen oder abzuschneiden.

Das erfindungsgemäße Verfahren kann weitere Schritte umfassen.

Das Verfahren kann das Bereitstellen von mindestens einem weiteren Draht oder Faden umfassen. Geeignete weitere Drähte oder Fäden können je nach vorgesehener Verwendung und/oder Funktion im Herstellverfahren oder für die spätere Anwendung des Edelmetallnetzes ausgewählt werden. Beispielsweise kann es sich bei dem weiteren Draht um einen Draht aus einem Nicht-Edelmetall handeln, der geeignet ist, um das Edelmetallnetz beim Einsatz im Reaktor zu stabilisieren. Zum Beispiel kann es sich dabei um einen Stahl- oder Edelstahldraht handeln. Das Verfahren umfasst in diesen Fällen das simultane Stricken von Bereichen des Gestricks unter Verwendung des mindestens einen weiteren Drahtes oder Fadens. Das Gestrick kann in diesem Fall Teile oder Bereiche umfassen, die nur den weiteren Draht oder Faden enthalten oder Teile oder Bereiche, die sowohl den weiteren Draht oder Faden als auch den edelmetallhaltigen Draht und/oder einen Stützfaden enthalten.

In einem weiteren Schritt können die verbindende Masche oder die verbindenden Maschen zwischen der ersten und zweiten Lage des zweilagigen Edelmetallnetzes an einer Seite entfernt werden, mit anderen Worten werden die beiden Lagen an einer Seite getrennt. Dadurch entsteht ein Edelmetallnetz, das nur noch an einer Seite, d.h. über jeweils nur eine Stoßkante, der beiden Lagen zumindest teilweise verbunden ist. Mit anderen Worten ist so ein einlagiges Edelmetallnetz herstellbar.

Nachfolgend wird die Erfindung anhand von Abbildungen und einem Beispiel näher erläutert. Sie ist jedoch nicht auf diese Ausführungsformen beschränkt.

| | |
|---|---|
| **Abbildung 1** | zeigt einen Strömungsreaktor zur heterogen-katalytischen Verbrennung von Ammoniak in schematischer Darstellung, |
| **Abbildung 2** | zeigt Ausführungsformen von Edelmetallnetzen, die mit dem erfindungsgemäßen Verfahren hergestellt werden können. |

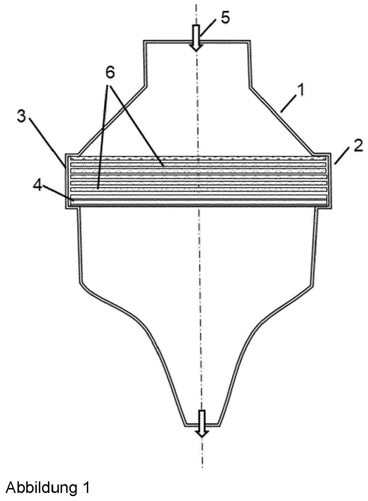

**Abbildung** 1 zeigt schematisch einen senkrecht positionierten Strömungsreaktor 1 zur heterogen-katalytischen Verbrennung von Ammoniak. Das Katalysatorsystem 2 bildet die eigentliche Reaktionszone des Strömungsreaktors 1. Es umfasst eine Katalysatorpackung 3 und nachgeschaltete Catchment-Netze 4. Die Katalysatorpackung 3 umfasst mehrere, in Strömungsrichtung 5 des Frischgases hintereinander angeordnete Katalysatornetze 6.

Typischerweise sind die Katalysatornetze 6 gestrickte Netze, die beispielsweise durch Verstricken von Draht mit einem Durchmesser von 76 µm aus verschiedenen Platin-RhodiumLegierungen hergestellt werden. Zusätzlich können Catchment-Netze 4 vorgesehen sein.

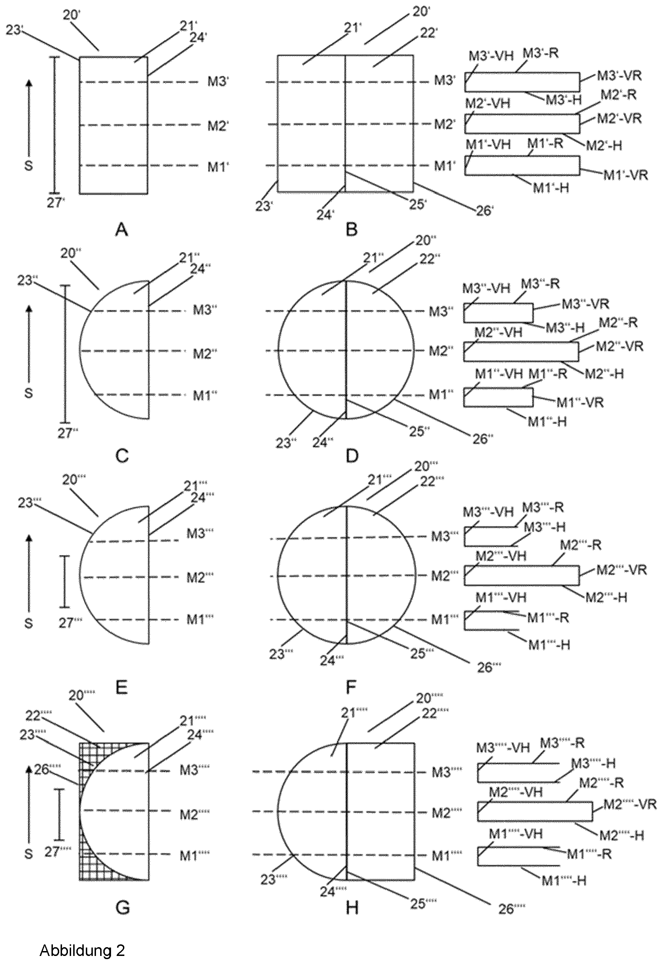

**Abbildung** 2 zeigt schematisch Ausführungsformen von Edelmetallnetzen, die mit dem erfindungsgemäßen Verfahren hergestellt werden können.

Abbildung 2 A und B zeigen ein zweilagiges Edelmetallnetzes 20' aus zwei rechteckigen Lagen 21' und 22', die an beiden Seiten und über die gesamte Länge des Edelmetallnetzes 20' entlang der Strickrichtung S verbunden sind. In der frontalen Ansicht in Abbildung 2 A ist nur die erste Lage 21' sichtbar. Abbildung 2 B zeigt eine entlang der Stoßkante 24` der ersten Lage 21' geöffnete Sicht des Edelmetallnetzes 20'. Das "Öffnen" ist an dieser Stelle virtuell zu verstehen und dient dem besseren Verständnis der Erfindung. Für den Fall, dass nach der Herstellung des zweilagigen Edelmetallnetzes 20' ein weiterer Verfahrensschritt erfolgt, in dem die beiden Stoßkanten 23' und 26' voneinander getrennt werden, hätte das entsprechende einlagige Edelmetallnetz die in Abbildung 2 B gezeigte Form. Außerdem gezeigt sind die Position von exemplarischen Strickreihen M1', M2', M3' entlang der Strickrichtung S auf verschiedenen Höhen des Edelmetallnetzes 20`, deren Positionen im Edelmetallnetz 20' durch gestrichelte Linien angedeutet sind. Der Abschnitt 27` der Länge des Edelmetallnetzes zeigt den Bereich bzw. die Strickreihen über die die beiden Lagen an ihren Stoßkanten (23` und 24' der ersten Lage 21' und 25' und 26` der zweiten Lage 22`) miteinander verbunden werden. Das Edelmetallnetz 20` hat eine schlauchartige Struktur, die am unteren und oberen Ende offen ist. Im Fall der Ausführungsform eines Edelmetallnetzes gemäß Abbildung 2 A und B wird jeweils eine Hinreihe (M1`-H, M2`-H, M3'-H) auf dem ersten Nadelbett und eine Rückreihe (M1'-R, M2`-R, M3`-R) auf dem zweiten Nadelbett gestrickt. Auf beiden Seiten erfolgt eine Verbindung der Hin- und Rückreihe (M1'-H - M1'-R, M2'-H - M2'-R, M3'-H - M3`-R) über verbindende Maschen (M1`-VH, M2'-VH, M3'-VH, M1`-VR M2'-VR, M3`-VR). Die beiden Seiten entsprechen den jeweiligen Stoßkanten der beiden Lagen (21', 22') des Edelmetallnetzes 20'.

Abbildung 2 C zeigt die Frontansicht eines Edelmetallnetzes 20", das aus zwei halbrunden Lagen 21" und 22" (die zweite Lage 22" ist in der Perspektive in Abb. 2 C nicht sichtbar) gebildet wird. Abbildung 2 D zeigt wiederum eine virtuell entlang der Stoßkante 24" aufgeklappte Perspektive des Edelmetallnetzes 20" und drei exemplarische Strickreihen M1", M2", M3" in verschiedenen Höhen entlang der Strickrichtung S. Sowohl Hin- als auch Rückreihen der unteren und oberen Strickreihe M1"-H, M3"-H und M1"-R, M3"-R sind kürzer, d.h. umfassen weniger Maschen, als die der mittleren Strickreihe (M2"-H, M2"-R). Über die Anzahl der Maschen je Strickreihe kann also die Formgebung des Edelmetallnetzes, bzw. die Form der Lagen, bestimmt werden. Die Lagen 21" und 22" sind über die vollständige Länge 27" auf ihren beiden Seiten verbunden. Beim Trennen der Verbindung der beiden Lagen 21" und 22" des Edelmetallnetzes 20" zwischen den Stoßkanten 23' und 26' kann ein Edelmetallnetz mit rundem Querschnitt erhalten werden.

In Abbildung 2 E und F ist ein Edelmetallnetz 20‴ gezeigt, das aus zwei halbrunden Lagen 21‴ und 22‴ gebildet wird, die nur auf Teilen der Länge des Edelmetallnetzes 27‴ auf beiden Seiten miteinander verbunden sind. Dementsprechend sind die Hin- und Rückreihen der unteren und oberen Strickreihen M1‴-H, M3‴-H und M1‴-R, M3‴-R nur an einer Seite miteinander verbunden (M1‴-VH, M3‴-VH). Die Stoßkanten 23‴ und 25‴ können über ihre vollständige Länge miteinander verbunden sein.

In Abbildung 2 G und H ist ein Edelmetallnetz 20"" gezeigt, das aus einer ersten halbrunden Lage 21"" und einer zweiten rechteckigen Lage 22"" (in Abb. 2 G schraffiert dargestellt) gebildet wird. Die beiden Lagen 21"" und 22"" sind nur auf Teilen der Länge 27"" miteinander verbunden.

### Beispiel und Vergleichsbeispiel

Auf einer Flachstrickmaschine mit zwei Nadelbetten wurde auf jedem Nadelbett mit einem PtRh5 Draht (76 µm Durchmesser) jeweils eine rechteckige Lage (100 cm Breite, 200 cm Länge) gestrickt. Im Vergleichsbeispiel wurden die beiden Lagen durch geeignete Fadenführung nur an einer Seite miteinander verbunden, im erfindungsgemäßen Beispiel an beiden Seiten (gemäß Abb. 2 A bzw. Abb. 2 B). Im letztgenannten Fall wurde nach dem Strickvorgang eine verbindende Seite aufgetrennt. In beiden Fällen wurde ein Edelmetallnetz mit einer Breite von 200 cm und einer Länge von 200 cm erhalten.

Trotz des zusätzlichen Arbeitsschrittes beim erfindungsgemäß hergestellten Produkt erwies sich das Verfahren als schneller und zuverlässiger. Während des Strickvorgangs des Vergleichsbeispiels traten immer wieder Drahtrisse auf, die eine Unterbrechung der Herstellung zur Folge hatten. Zusätzlich zu den notwendig werdenden Reparaturstellen des Drahtes wies das Gestrick außerdem eine ungleichmäßige verzogene Struktur auf. Solche Ungleichmäßigkeiten im Gestrick stellen potenziell mechanische Schwachstellen dar, die sich im der Anwendung des Netzes im Reaktor negativ auswirken.

### Definition der verwendeten Bezugszeichen

1 Strömungsreaktor
2 Katalysatorsystem
3 Katalysatorpackung
4 Catchment-Netze
5 Strömungsrichtung
6 einlagige Katalysatornetze
20', 20", 20‴, 20"" Gestricktes Edelmetallnetz
21', 21", 21‴, 21 "" Erste Lage eines Edelmetallnetzes
22', 22", 22‴, 22"" Zweite Lage eines Edelmetallnetzes
23', 23", 23‴, 23"" Stoßkanten der Edelmetallnetzlagen
24', 24", 24‴, 24""
25', 25", 25‴, 25""
26', 26", 26‴, 26""
27', 27", 27‴, 27"" Bereiche des Edelmetallnetzes, die auf beiden Seiten verbunden sind
M1', M1", M1‴, M1‴ Untere Strickreihe
M2', M2", M2‴, M2"" Mittlere Strickreihe
M3', M3", M3‴, M3"" Obere Strickreihe
M1'-H, M1"-H, M1‴-H, M1""-H Hinreihe
M2'-H, M2"-H, M2‴-H, M2""-H
M3'-H, M3"-H, M3‴-H, M3""-H
M1'-R, M1"-R, M1‴-R, M1""-R Rückreihe
M2'-R, M2"-R, M2‴-R, M2""-R
M3'-R, M3"-R, M3‴-R, M3""-R
M1'-HR, M1"-HR, M1‴-HR, M1""-HR Verbindende Maschen
M2'-HR, M2"-HR, M2‴-HR, M2""-HR
M3'-HR, M3"-HR, M3‴-HR, M3""-HR
M1'-VR, M1"-VR, M1‴-VR, M1""-VR
M2'-VR, M2"-VR, M2‴-VR, M2""-VR
M3'-VR, M3"-VR, M3‴-VR, M3ʺ‴-VR
S Strickrichtung

## Patentansprüche

1. Verfahren zur Herstellung eines zweilagigen Edelmetallnetzes (20', 20", 20‴, 20"") auf einer Flachstrickmaschine, wobei die Flachstrickmaschine ein erstes und ein zweites Nadelbett aufweist, umfassend die Schritte
- Bereitstellen von mindestens einem edelmetallhaltigen Draht,
- Stricken des Edelmetallnetzes (20', 20", 20‴, 20""),
wobei simultan auf dem ersten Nadelbett die erste Lage des Edelmetallnetzes (21', 21", 21‴, 21"") und auf dem zweiten Nadelbett die zweite Lage des Edelmetallnetzes (22', 22", 22‴, 22"") gestrickt werden,
wobei beide Lagen jeweils über mindestens zwei Stoßkanten verfügen (23', 23", 23‴, 23"", 24', 24", 24‴, 24"", 25', 25", 25‴, 25"", 26', 26", 26‴, 26""),
**dadurch gekennzeichnet, dass**
die erste und die zweite Lage des Edelmetallnetzes (21', 21", 21‴, 21"", 22', 22", 22‴, 22"") durch mindestens eine verbindende Strickmasche (M1'-HR, M1"-HR, M1‴-HR, M1""-HR, M2'-HR, M2"-HR, M2‴-HR, M2""-HR, M3'-HR, M3"-HR, M3‴-HR, M3""-HR, M1`-VR, M1"-VR, M1‴-VR, M1""-VR, M2'-VR, M2"-VR, M2‴-VR, M2""-VR, M3'-VR, M3"-VR, M3‴-VR, M3ʺ‴-VR) zumindest teilweise an ihren beiden jeweiligen Stoßkanten (23', 23", 23‴, 23"", 24', 24", 24‴, 24"", 25', 25", 25‴, 25"", 26', 26", 26‴, 26"") verbunden werden, wodurch ein zumindest teilweise schlauchartiges Gestrick entsteht.

2. Verfahren nach Anspruch 1, wobei die Verbindung zumindest teilweise in den gleichen Strickreihen erfolgt.

3. Verfahren nach einem der vorangegangenen Ansprüche, wobei der mindestens eine edelmetallhaltige Draht aus Platin, einer Platinlegierung, Palladium oder einer Palladiumlegierung besteht.

4. Verfahren nach einem der vorangegangenen Ansprüche, wobei die erste und die zweite Lage (21', 21", 21‴, 21"", 22', 22", 22‴, 22"") des Edelmetallnetzes (20', 20", 20‴, 20"") aus einem edelmetallhaltigen Draht oder edelmetallhaltigen Drähten gleicher Zusammensetzung gestrickt werden.

5. Verfahren nach einem der vorangegangenen Ansprüche, wobei die erste und die zweite Lage (21', 21", 21‴, 21"", 22', 22", 22‴, 22"") des zweilagigen Edelmetallnetzes (20', 20", 20‴, 20"") aus einem edelmetallhaltigen Draht oder edelmetallhaltigen Drähten gleichen Durchmessers gestrickt werden.

6. Verfahren nach einem der vorangegangenen Ansprüche, wobei die erste und die zweite Lage (21', 21", 21‴, 21"", 22', 22", 22‴, 22"") des zweilagigen Edelmetallnetzes (20', 20", 20‴, 20"") im gleichen Strickmuster gestrickt werden.

7. Verfahren nach einem der vorangegangenen Ansprüche, wobei die erste und zweite Lage (21', 21", 21‴, 21"", 22', 22", 22‴, 22"") des zweilagigen Edelmetallnetzes (20', 20", 20‴, 20"") deckungsgleich sind.

8. Verfahren nach einem der vorangegangenen Ansprüche, wobei das Verfahren das simultane Stricken eines Stütznetzes unter Verwendung eines Stützfadens umfasst.

9. Verfahren nach Anspruch 8, wobei das Stütznetz in einem zusätzlichen Verfahrensschritt entfernt wird.

10. Verfahren nach einem der vorangegangenen Ansprüche, wobei in einem weiteren Schritt die verbindende Masche oder die verbindenden Maschen (M1`-HR, M1"-HR, M1‴-HR, M1""-HR, M2'-HR, M2"-HR, M2‴-HR, M2""-HR, M3'-HR, M3"-HR, M3‴-HR, M3""-HR, M1'-VR, M1"-VR, M1‴-VR, M1""-VR, M2`-VR, M2"-VR, M2‴-VR, M2""-VR, M3'-VR, M3"-VR, M3‴-VR, M3ʺ‴-VR) zwischen der ersten und zweiten Lage (21', 21", 21‴, 21"", 22', 22", 22‴, 22"") des zweilagigen Edelmetallnetzes (20', 20", 20‴, 20"") an einer Seite entfernt werden.

## Claims

1. A method for producing a two-layer noble metal mesh (20', 20", 20‴, 20"") on a flat-bed knitting machine, the flat-bed knitting machine comprising a first and a second needle bed, the method comprising the steps of
- providing at least one noble-metal-containing wire,
- knitting the noble metal mesh (20', 20", 20‴, 20""),
the first layer of the noble metal mesh (21', 21", 21‴, 21"") being knitted on the first needle bed and the second layer of the noble metal mesh (22', 22", 22‴, 22"") being knitted on the second needle bed at the same time,
the two layers each comprising at least two abutting edges (23', 23", 23‴, 23"", 24', 24", 24‴, 24"", 25', 25", 25‴, 25"", 26', 26", 26‴, 26""),
**characterized in that**
the first and the second layer of the noble metal mesh (21', 21", 21‴, 21"", 22', 22", 22‴, 22"") are connected, at least in part, at the two respective abutting edges (23', 23", 23‴, 23"", 24', 24", 24‴, 24"", 25', 25", 25‴, 25"", 26', 26", 26‴, 26"") thereof, by at least one connecting knit stitch (M1'-HR, M1"-HR, M1‴-HR, M1""-HR, M2'-HR, M2"-HR, M2‴-HR, M2""-HR, M3'-HR, M3"-HR, M3‴-HR, M3""-HR, M1'-VR, M1"-VR, M1‴-VR, M1""-VR, M2'-VR, M2"-VR, M2‴-VR, M2""-VR, M3'-VR, M3"-VR, M3‴- VR, M3ʺ‴-VR), thus creating an at least partially tubular knitted fabric.

2. The method according to claim 1, wherein the connection is created at least in part in the same knitting rows.

3. The method according to either of the preceding claims, wherein the at least one noble-metal-containing wire consists of platinum, a platinum alloy, palladium, or a palladium alloy.

4. The method according to any of the preceding claims, wherein the first and the second layer (21', 21", 21‴, 21"", 22', 22", 22‴, 22"") of the noble metal mesh (20', 20", 20‴, 20"") are knitted from a noble-metal-containing wire or noble-metal-containing wires of the same composition.

5. The method according to any of the preceding claims, wherein the first and the second layer (21', 21", 21‴, 21"", 22', 22", 22‴, 22"") of the two-layer noble metal mesh (20', 20", 20‴, 20"") are knitted from a noble-metal-containing wire or noble-metal-containing wires of the same diameter.

6. The method according to any of the preceding claims, wherein the first and the second layer (21', 21", 21‴, 21"", 22', 22", 22‴, 22"") of the two-layer noble metal mesh (20', 20", 20‴, 20"") are knitted in the same knitting pattern.

7. The method according to any of the preceding claims, wherein the first and the second layer (21', 21", 21‴, 21"", 22', 22", 22‴, 22"") of the two-layer noble metal mesh (20', 20", 20‴, 20"") are congruent.

8. The method according to any of the preceding claims, wherein the method comprises simultaneously knitting a support mesh using a support thread.

9. The method according to claim 8, wherein the support mesh is removed in an additional method step.

10. The method according to any of the preceding claims, wherein, in a further step, the connecting stitch or the connecting stitches (M1'-HR, M1"-HR, M1‴-HR, M1""-HR, M2'-HR, M2"-HR, M2‴-HR, M2""-HR, M3'-HR, M3"-HR, M3‴-HR, M3""-HR, M1'-VR, M1"-VR, M1‴-VR, M1""-VR, M2'-VR, M2"-VR, M2‴-VR, M2""-VR, M3'-VR, M3"-VR, M3‴- VR, M3ʺ‴-VR) between the first and second layers (21', 21", 21‴, 21"", 22', 22", 22‴, 22"") of the two-layer noble metal mesh (20', 20", 20‴, 20"") are removed on one side.

## Revendications

1. Procédé permettant la fabrication d'un filet en métal précieux (20', 20", 20‴, 20"") à deux couches sur une tricoteuse rectiligne, dans lequel la tricoteuse rectiligne présente une première et une seconde fonture, comprenant les étapes consistant à
- fournir au moins un fil contenant un métal précieux,
- tricoter le filet en métal précieux (20', 20", 20‴, 20""),
dans lequel, simultanément, la première couche du filet en métal précieux (21`, 21", 21‴, 21"") est tricotée sur la première fonture et la seconde couche du filet en métal précieux (22', 22", 22‴, 22"") est tricotée sur la seconde fonture,
dans lequel les deux couches disposent respectivement d'au moins deux lisières (23', 23", 23"", 23"", 24', 24", 24‴, 24"", 25', 25", 25"", 25"", 26', 26", 26‴, 26""),
**caractérisé en ce que**
la première et la seconde couche du filet en métal précieux (21', 21", 21‴, 21"", 22', 22", 22‴, 22"") sont reliées par au moins une maille de tricot de liaison (M1`-HR, M1"-HR, M1‴-HR, M1""-HR, M2`-HR, M2"-HR, M2‴-HR, M2""-HR, M3`-HR, M3"-HR, M3‴-HR, M3""-HR, M1'-VR, M1"-VR, M1‴-VR, M1""-VR, M2`-VR, M2"-VR, M2‴-VR, M2""-VR, M3`-VR, M3"-VR, M3‴-VR, M3ʺ‴-VR) au moins en partie sur leurs deux lisières respectives (23', 23", 23"", 23"", 24', 24", 24‴, 24"", 25', 25", 25"", 25"", 26', 26", 26‴, 26""), moyennant quoi un tricot au moins partiellement tubulaire est obtenu.

2. Procédé selon la revendication 1, dans lequel la liaison est réalisée au moins en partie dans les mêmes rangs de tricot.

3. Procédé selon l'une des revendications précédentes, dans lequel l'au moins un fil contenant un métal précieux est constitué de platine, d'un alliage de platine, de palladium ou d'un alliage de palladium.

4. Procédé selon l'une des revendications précédentes, dans lequel la première et la seconde couche (21', 21", 21‴, 21"", 22', 22", 22‴, 22"") du filet en métal précieux (20', 20", 20‴, 20"") sont tricotées à partir d'un fil contenant un métal précieux ou de fils contenant un métal précieux de même composition.

5. Procédé selon l'une des revendications précédentes, dans lequel la première et la seconde couche (21', 21", 21‴, 21"", 22', 22", 22‴, 22"") du filet en métal précieux (20', 20", 20‴, 20"") à deux couches sont tricotées à partir d'un fil contenant un métal précieux ou de fils contenant un métal précieux de même diamètre.

6. Procédé selon l'une des revendications précédentes, dans lequel la première et la seconde couche (21', 21", 21‴, 21"", 22', 22", 22‴, 22"") du filet en métal précieux (20', 20", 20‴, 20"") à deux couches sont tricotées selon le même dessin de tricotage.

7. Procédé selon l'une des revendications précédentes, dans lequel la première et la seconde couche (21', 21", 21‴, 21"", 22', 22", 22‴, 22"") du filet en métal précieux (20', 20", 20‴, 20"") à deux couches coïncident.

8. Procédé selon l'une des revendications précédentes, dans lequel le procédé comprend le tricotage simultané d'un filet de support en utilisant un fil de support.

9. Procédé selon la revendication 8, dans lequel le filet de support est retiré au cours d'une étape de procédé supplémentaire.

10. Procédé selon l'une des revendications précédentes, dans lequel, dans une autre étape, la maille de liaison ou les mailles de liaison (M1`-HR, M1"-HR, M1‴-HR, M1""-HR, M2`-HR, M2"-HR, M2‴-HR, M2""-HR, M3`-HR, M3"-HR, M3‴-HR, M3""-HR, M1'-VR, M1"-VR, M1‴-VR, M1""-VR, M2'-VR, M2"-VR, M2‴-VR, M2""-VR, M3`-VR, M3"-VR, M3‴-VR, M3ʺ‴-VR) sont retirées sur un côté entre la première et la seconde couche (21', 21", 21‴, 21"", 22', 22", 22‴, 22"") du filet en métal précieux (20', 20", 20‴, 20"") à deux couches.
